# EUROPEAN PATENT APPLICATION

(11) **EP 3 059 821 A1**
(43) Date of publication of application: **24.08.2016**
(21) Application number: 15155856.6
(22) Date of filing: 20.02.2015
(51) Int. Cl.: H02G 3/12, H02G 3/08

(54) **Mounting box and method of manufacturing mounting box**

(71) Applicant: ABB Oy, 00380 Helsinki (FI)
(72) Inventor: Andersson, Johan, 06100 Porvoo (FI); Luomi, Juho, 06100 Porvoo (FI); Tervo, Pekka, 06100 Porvoo (FI)
(74) Representative: Kolster Oy Ab

(57) **Abstract**

A mounting box comprising a box case (2) and a fastening mechanism for fastening the box case (2) into an opening in a wall (4). The fastening mechanism comprises a collar element (6) and a pressing element (8) adapted in use to be rotated about a rotation axis relative to the box case (2). The pressing element (8) is adapted to receive a threaded part (105) of a headed screw (10) for moving the pressing element (8) in an axial direction. The mounting box comprises a neck member (12) which in its unbroken state connects the pressing element (8) and the box case (2). The neck member (12) is manufactured from the same material as the pressing element (8) and the box case (2). The neck member (12) is adapted to be broken by axial movement of the pressing element (8).

## Description

### FIELD OF THE INVENTION

The present invention relates to a mounting box.

A mounting box, or an installation box, is known in the art. A known mounting box comprises a box case and a fastening mechanism for fastening the box case into an opening in a wall, wherein the fastening mechanism comprises a collar element integrated into the box case, and at least one separate pressing element adapted to co-operate with the collar element for directing a pressing force to the wall. The known pressing element is a metallic element adapted to be moved into contact with the wall by means of a screw.

One of the problems associated with the above mounting box is that said separate metallic pressing elements are expensive to manufacture and install.

### BRIEF DESCRIPTION OF THE INVENTION

An object of the present invention is to provide a mounting box with a simple and inexpensive fastening mechanism for fastening the mounting box into an opening in a wall.

The objects of the invention are achieved by a mounting box and a method of manufacturing a mounting box which are characterized by what is stated in the independent claims. The preferred embodiments of the invention are disclosed in the dependent claims.

The invention is based on the idea of integrating a pressing element into a box case during a manufacturing process such that there is a neck member connecting the pressing element and the box case, the neck member being manufactured from the same material as the pressing element and the box case. The neck member retains, in its unbroken state, the pressing element in a mounting position. The neck member is adapted to be broken by axial movement of the pressing element in order to transfer the pressing element into contact with a wall during installation of the mounting box. In an embodiment the box case, the pressing element and the neck member are manufactured with a single moulding process.

An advantage of the mounting box of the invention is that it has fewer separate parts than known corresponding mounting boxes. Further, manufacturing process of the mounting box of the invention is simpler and faster than a manufacturing process of a known mounting box with separate pressing elements.

### BRIEF DESCRIPTION OF THE DRAWINGS

In the following the invention will be described in greater detail by means of preferred embodiments with reference to the attached drawings, in which
Figure 1 shows a mounting box according to an embodiment of the invention;
Figure 2 shows the mounting box of Figure 1 and a portion of a wall having an opening for the mounting box;
Figure 3 shows the mounting box of Figure 2 inserted into the opening in the wall;
Figure 4 shows the mounting box of Figure 3 fastened to the opening in the wall by a fastening mechanism;
Figure 5 is a cross sectional view of the mounting box of Figure 1; and
Figure 6 shows the mounting box of Figure 1 as seen from below with pressing elements in their use position.

### DETAILED DESCRIPTION OF THE INVENTION

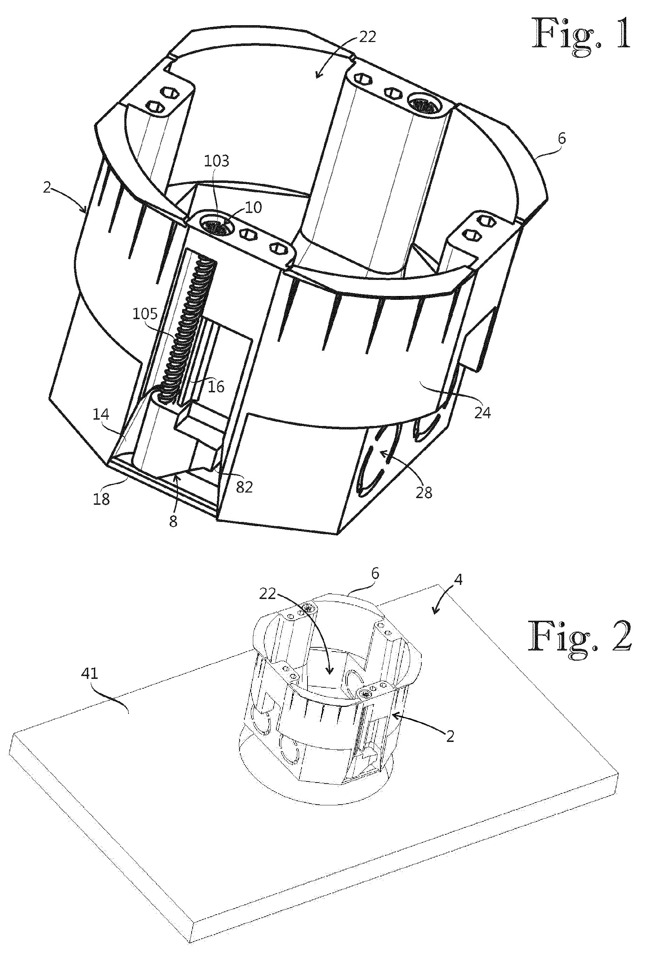

Figure 1 shows a mounting box comprising a box case 2 and a fastening mechanism for fastening the box case 2 into an opening in a wall. Figure 2 shows the mounting box of Figure 1 and a portion of a wall 4 having an opening for the mounting box.

The box case 2 defines a mounting space for accommodating an electrical component such as a wall socket or a light switch, and has a box opening 22 providing an access into the mounting space. The box case 2 comprises a side wall 24 defining a radial boundary of the mounting space, and a bottom wall defining an axial boundary of the mounting space. The side wall 24 comprises installation apertures 28 adapted to provide a passage for electric wires between exterior of the box case 2 and the mounting space.

The fastening mechanism comprises a collar element 6, a pressing element 8 and a headed screw 10. The box case 2 comprises a rotation limiter element 14, a guide element 16, and an axial support element 18 for guiding and supporting the pressing element 8 as defined below.

The collar element 6 is an integral part of the box case 2 and adapted to be in contact with a first side 41 of the wall 4, in the vicinity of the edge of the opening. In an alternative embodiment a collar element may be a separate element attached to a box case and adapted to be in contact with a first side of a wall. The collar element 6 defines a collar plane adapted to be parallel to a wall plane defined by the wall 4. The collar element 6 projects from the box case 2 in radial direction. The maximum diameter of the collar element 6 is greater than the maximum diameter of the box case 2 such that the collar element 6 is capable of engaging an edge of an opening through which the box case 2 fits. Also, the maximum diameter of the collar element 6 is greater than the diameter of the opening in the wall 4 such that the collar element 6 is adapted to prevent the mounting box from sinking completely into the opening in the wall 4.

The pressing element 8 is adapted in use to be rotated about a rotation axis between a mounting position and a use position relative to the box case 2. The mounting position of the pressing element 8 is adapted to allow inserting of the box case 2 into the opening in the wall 4. The use position of the pressing element 8 is adapted for contacting a second side of the wall 4, in the vicinity of the edge of the opening, in order to co-operate with the collar element 6 for directing a pressing force to the wall 4. The pressing force is adapted to keep the mounting box in place with relation to the wall 4. The second side of the wall 4 faces opposite direction relative to the first side 41 of the wall 4.

Herein the use position of the pressing element 8 is an extreme position of the pressing element 8 relative to the mounting position. Naturally the pressing element 8 is capable of contacting a second side of the wall 4 even if the pressing element 8 is not precisely in the use position, or in an extreme position relative to the mounting position.

The mounting box is adapted to be pushed into the opening in the wall 4 in an installation direction which is substantially perpendicular to the wall plane and parallel to the axial direction. The mounting box is adapted to be pushed into the opening the bottom wall first such that the collar plane is substantially parallel to the wall plane. When the mounting box is installed, the mounting space is accessible from the first side 41 of the wall 4 through the box opening 22.

The headed screw 10 is provided with a screw head 103 and a threaded part 105. The diameter of the screw head 103 is greater than the diameter of the threaded part 105. The threaded part 105 of the headed screw 10 is received in the pressing element 8. An internal thread provided in the pressing element 8 is adapted to co-operate with the threaded part 105 of the headed screw 10 for moving the pressing element 8 in the axial direction towards the collar element 6 in order to achieve the pressing force that fastens the box case 2 into the opening in the wall 4. When the threaded part 105 of the headed screw 10 is received in the pressing element 8, turning the headed screw 10 in tightening direction with relation to the pressing element 8 moves the pressing element 8 towards the screw head 103 in the axial direction.

Herein the axial direction of the mounting box is perpendicular to the collar plane. A radial direction of the mounting box is a direction perpendicular to an imaginary center line of the box case 2. The imaginary center line is perpendicular to the collar plane, and traverses the bottom wall in the middle of the bottom wall. The bottom wall of the box case 2 is located at a distance from the collar plane in the axial direction. The side wall 24 extends substantially perpendicular to the radial direction.

The headed screw 10 defines the rotation axis of the pressing element 8 when the threaded part 105 of the headed screw 10 is received in the pressing element 8. The longitudinal direction of the headed screw 10 coincides with the axial direction of the mounting box.

The rotation limiter element 14 is adapted to define the use position of the pressing element 8 by limiting a maximum rotation angle of the pressing element 8 relative to the mounting position. In the use position of the pressing element 8 the distance between the imaginary center axis of the box case 2 and a distal end 82 of the pressing element 8 is greater than in the mounting position of the pressing element 8. When the pressing element 8 is in its use position and is located on the second side of the wall 4, the pressing element 8 prevents pulling of the mounting box through the opening in the wall 4.

The guide element 16 is adapted to guide the pressing element 8 during axial movement of the pressing element 8 by defining a play angle which is a maximum rotation angle of the pressing element 8 relative to the use position. The play angle is less than the angle between the use position and the mounting position. In an embodiment the play angle is approximately 20° and the angle between the use position and the mounting position is approximately 90°. In alternative embodiments the play angle may be in the range of 2° to 30°, and the angle between the use position and the mounting position may be in the range of 75° to 110°.

The play angle is chosen such that when the pressing element is located within the play angle, the pressing element is capable of appropriately contacting a second side of the wall in order to co-operate with the collar element for directing a pressing force to the wall. If the play angle is too small there is a risk that the pressing element will stick in the guide element and axial movement of the pressing element will be prevented. If the play angle is too big there is a risk that the pressing element rotates to a disadvantageous position far from the use position such that the pressing element is not capable of co-operating with the collar element for directing a good pressing force to the wall.

The axial support element 18 is adapted to axially support the pressing element 8 during screwing of the headed screw 10 into the pressing element 8. The axial support element 18 is also adapted to prevent axial movement of the pressing element 8 beyond the axial support element 18. The pressing element 8 is located between the collar element 6 and the axial support element 18. The axial support element 18 is an integral part of the box case 2.

In an alternative embodiment a mounting box does not comprise a headed screw in which case at least one headed screw must be acquired separately. In another embodiment a mounting box is sold with at least one headed screw such that the at least one headed screw is separate from the rest of the mounting box. In above mentioned embodiments the pressing element may be provided with a ready internal thread for a threaded part of a headed screw or the pressing element may simply be provided with a through hole such that a threaded part screwed into the through hole forms an internal thread in the pressing element. In a further alternative embodiment a pressing element is provided with a closed hole adapted to be punctured by a threaded part of a headed screw. In each of the above embodiments the pressing element is adapted to receive a threaded part of a headed screw.

An axial support element is especially useful in embodiments where a pressing element is not provided with a ready internal thread. Forming an internal thread in a pressing element with a headed screw exerts greater axial force on the pressing element than simply screwing the headed screw in a ready internal thread. Forming of an internal thread in a pressing element may be facilitated by using a headed screw with a sharp point. Sharp-pointed screws and self-drilling screws are well known so they are not described here.

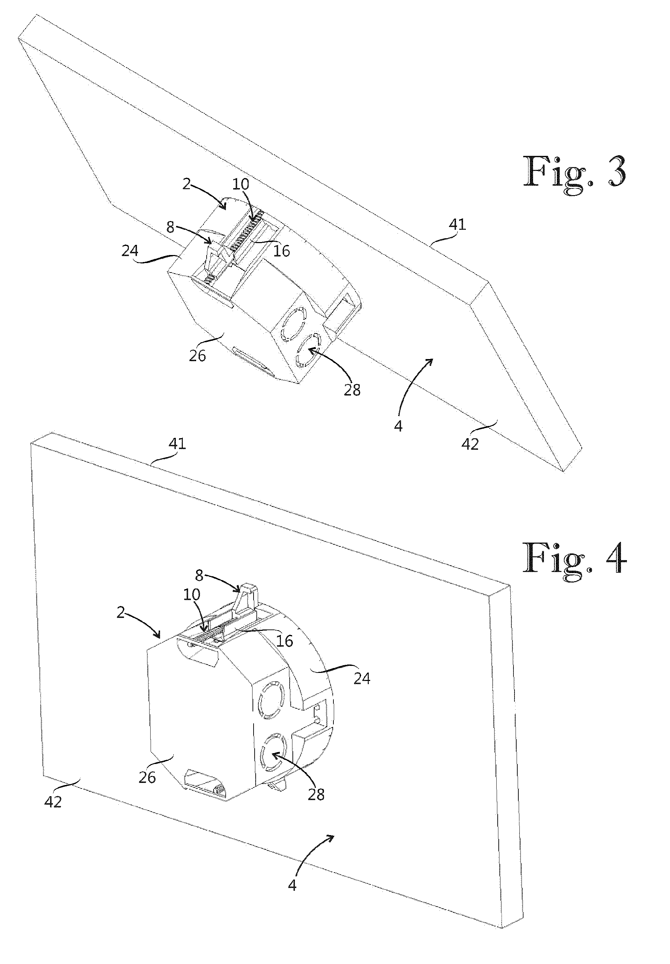

Figure 3 shows the mounting box of Figure 2 inserted into the opening in the wall 4. In Figure 3 the box case 2 has been pushed into its final mounting depth wherein the collar element 6 is in contact with the first side 41 of the wall 4. The pressing element 8 is in its use position. The pressing element 8 is at a distance from the second side 42 of the wall 4 in the axial direction. The bottom wall of the box case 2 has been denoted with reference sign 26.

Figure 4 shows the mounting box of Figure 3 fastened into the opening in the wall 4 by the fastening mechanism. Compared to Figure 3, the pressing element 8 has been moved in the axial direction into contact with the second side 42 of the wall 4 by turning the headed screw 10 in tightening direction.

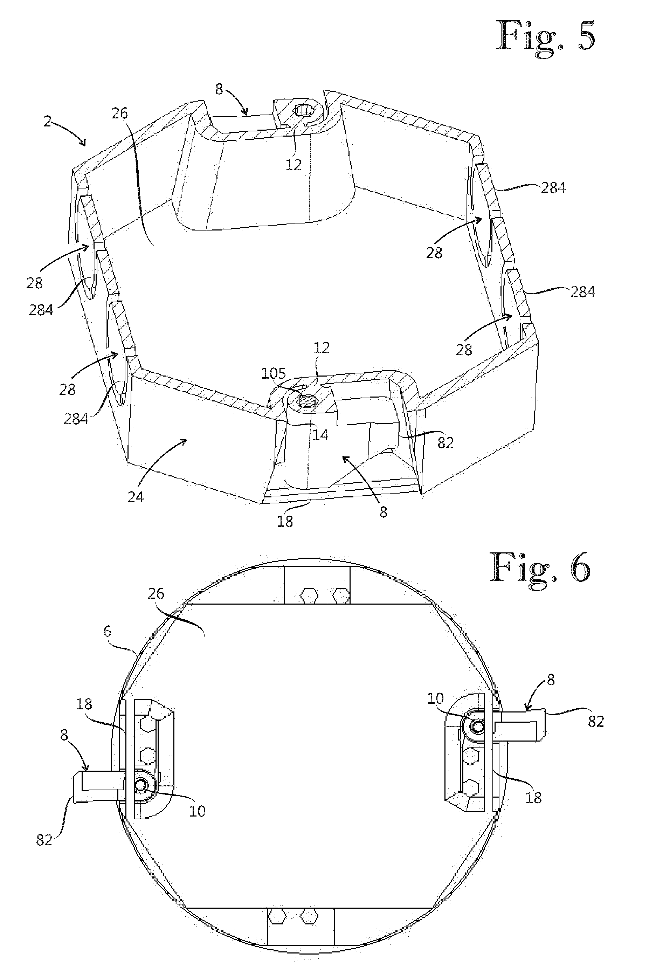

Figure 5 is a cross sectional view of the mounting box of Figure 1. Figure 5 depicts a lower portion of the mounting box, and shows that the mounting box comprises two neck members 12 each of which connects corresponding pressing element 8 and the box case 2 and retains the pressing element 8 in the mounting position. In Figure 5 the neck members 12 are in their unbroken state while in Figures 3 and 4 the neck member corresponding to the pressing element 8 is broken.

Each neck member 12 is located adjacent the rotation axis of corresponding pressing element 8 and extends substantially in radial direction relative to the rotation axis of the pressing element 8. Herein a neck member is considered to be located adjacent the rotation axis of a pressing element if distance between the neck member and the rotation axis of the pressing element is a fraction of the distance between the rotation axis of the pressing element and a distal end of the pressing element.

The neck member 12 is adapted to be broken by axial movement of the pressing element 8. The neck member 12 is manufactured from the same plastic material as the pressing element 8 and the box case 2. The box case 2, the pressing element 8 and the neck member 12 are manufactured with a single moulding process such as an injection moulding process. In alternative embodiments different materials may be used, and the neck member, the pressing element and the box case may be manufactured in separate processes.

The guide element 16 is designed such that the pressing element 8 is capable of rotating from the mounting position to the use position. In embodiments where the neck member is adapted to be broken primarily with axial movement of the pressing element, the guide element should allow some axial movement for the pressing element while the pressing element is in the mounting position and the neck member is unbroken. The pressing element is adapted to enter the guide element after the neck member is broken. In an alternative embodiment a lower end of the guide element has a bevelled form such that the pressing element is guided gradually into the use position while the pressing element moves in axial direction.

The threaded part 105 of the headed screw 10 is adapted to co-operate with the pressing element 8 for providing the axial movement of the pressing element 8 capable of breaking the neck member 12. The breaking of the neck member 12 is achievable by tightening the headed screw 10 when the threaded part 105 is received in the pressing element 8 and the screw head 103 is in contact with the box case 2. The box case 2 is adapted to exert a counterforce to the screw head 103 enabling the breaking of the neck member 12. The box case 2 comprises a screw hole for the headed screw 10, and the edge of the screw hole is adapted to exert said counterforce. The screw hole is an unthreaded hole. In an embodiment where the mounting box does not comprise a headed screw, a screw hole provided in the box case may be a closed hole adapted to be punctured by a threaded part of a headed screw.

Friction between the threaded part 105 of the headed screw 10 and the pressing element 8 is great enough for rotating the pressing element 8 between the mounting position and the use position by turning the headed screw 10 when the threaded part 105 is received in the pressing element 8 and the neck member 12 is broken. The pressing element 8 is automatically rotated into the use position when the headed screw 10 is turned to tightening direction.

The embodiment of Figure 5 comprises one neck member 12 per pressing element 8. In an alternative embodiment a mounting box comprises a plurality of neck members per pressing element.

Figure 5 shows that the side wall 24 is provided with four installation apertures 28. Each installation aperture 28 is located at a distance from both pressing elements 8 such that each installation aperture 28 is accessible in every position of the pressing elements 8. In other words the pressing elements 8 do not block any of the installation apertures 28 regardless of their position. Further, the installation apertures 28 are located at a distance from the collar element 6 such that even if the mounting box would be fastened to a wall much thicker than wall 4 depicted in Figures 2 to 4, the thicker wall would not block the installation apertures 28.

Each installation aperture 28 is blocked by a removable shield plug 284. Each removable shield plug 284 is an integral part of the box case 2. Each removable shield plug 284 is adapted to be cut off in order to enable introducing of an elongated electric installation member into corresponding installation aperture 28. Cutting off the removable shield plug 284 is easy since the removable shield plug 284 is only supported to rest of the box case 2 through four narrow supporting members. Idea is that an electrician removes required number of removable shield plugs 284 while the rest removable shield plugs protect the mounting space against dirt and foreign bodies.

In the embodiment of Figure 5 only the side wall 24 is provided with installation apertures 28. In an alternative embodiment there is at least one installation aperture in the bottom wall of the box case.

Figure 6 shows the mounting box of Figure 1 as seen from below with pressing elements 8 in their use position. Figure 6 shows that distance between the distal ends 82 of the pressing elements 8 is substantially greater than maximum diameter of the collar element 6.

It will be obvious to a person skilled in the art that the inventive concept can be implemented in various ways. The invention and its embodiments are not limited to the examples described above but may vary within the scope of the claims.

## Claims

1. A mounting box comprising a box case (2) and a fastening mechanism for fastening the box case (2) into an opening in a wall (4), the box case (2) defines a mounting space for accommodating an electrical component, and has a box opening (22) providing an access into the mounting space, the fastening mechanism comprising:
a collar element (6) attached to the box case (2) and adapted to be in contact with a first side (41) of the wall (4), the collar element (6) defining a collar plane adapted to be parallel to a wall plane defined by the wall (4); and
a pressing element (8) adapted in use to be rotated about a rotation axis between a mounting position and a use position relative to the box case (2), the mounting position of the pressing element (8) being adapted to allow inserting of the box case (2) into the opening in the wall (4), and the use position of the pressing element (8) being adapted for contacting a second side (42) of the wall (4) in order to co-operate with the collar element (6) for directing a pressing force to the wall (4), the pressing element (8) is adapted to receive a threaded part (105) of a headed screw (10) for moving the pressing element (8) in an axial direction in order to achieve the pressing force, the axial direction being substantially perpendicular to the collar plane, the headed screw (10) defining the rotation axis of the pressing element (8) when the threaded part (105) of the headed screw (10) is received in the pressing element (8),
**characterized in that** the mounting box comprises a neck member (12) which in its unbroken state connects the pressing element (8) and the box case (2) and retains the pressing element (8) in the mounting position, the neck member (12) being manufactured from the same material as the pressing element (8) and the box case (2), and the neck member (12) being adapted to be broken by axial movement of the pressing element (8).

2. A mounting box according to claim 1, **characterized in that** the collar element (6) is an integral part of the box case (2) and manufactured from the same material as the box case (2).

3. A mounting box according to claim 1 or 2, **characterized in that** the neck member (12) is located adjacent the rotation axis of the pressing element (8) and extends substantially in radial direction relative to the rotation axis of the pressing element (8).

4. A mounting box according to any one of claim 1 to 3, **characterized in that** the box case (2) comprises a rotation limiter element (14) adapted to define the use position of the pressing element (8) by limiting a maximum rotation angle of the pressing element (8) relative to the mounting position.

5. A mounting box according to any one of claim 1 to 4, **characterized in that** the box case (2) comprises a guide element (16) adapted to guide the pressing element (8) during axial movement of the pressing element (8) by defining a play angle which is a maximum rotation angle of the pressing element (8) relative to the use position, the play angle being substantially less than an angle between the use position and the mounting position.

6. A mounting box according to any one of claim 1 to 5, **charac**t**erized** in that the box case (2) comprises an axial support element (18) adapted to axially support the pressing element (8) during screwing of a headed screw (10) into the pressing element (8).

7. A mounting box according to any one of claim 1 to 6, **characterized in that** the fastening mechanism comprises a headed screw (10) provided with a screw head (103) and a threaded part (105) such that friction between the threaded part (105) and the pressing element (8) is great enough for rotating the pressing element (8) between the mounting position and the use position by turning the headed screw (10) when the threaded part (105) is received in the pressing element (8) and the neck member (12) is broken.

8. A mounting box according to claim 7, **characterized in that** the threaded part (105) of the headed screw (10) is adapted to co-operate with the pressing element (8) for providing the axial movement of the pressing element (8) capable of breaking the neck member (12), wherein the breaking of the neck member (12) is achievable by tightening the headed screw (10) when the threaded part (105) is received in the pressing element (8) and the screw head (103) is in contact with the box case (2).

9. A mounting box according to any one of claim 1 to 8, **characterized in that** the box case (2) comprises a side wall (24) defining a radial boundary of the mounting space, and a bottom wall (26) defining an axial boundary of the mounting space, the side wall (24) comprising at least one installation aperture (28) adapted to provide a passage for electric wires between exterior of the box case (2) and the mounting space, the at least one installation aperture (28) being accessible in every position the pressing element (8).

10. A method of manufacturing a mounting box according to any one of claims 1 to 9, **characterized in that** the box case (2), the pressing element (8) and the neck member (12) are manufactured with a single moulding process.
